# EUROPEAN PATENT SPECIFICATION

(11) **EP 2 223 258 B1**
(45) Date of publication and mention of the grant of the patent: **15.02.2017**
(21) Application number: 08847323.6
(22) Date of filing: 07.11.2008
(51) Int. Cl.: G06F 17/00, H04L 12/26, H04L 29/02, H04L 29/06

(54) **NETWORK RATING**
NETZWERKEINSTUFUNG
ÉVALUATION DE RÉSEAU

(30) Priority: 09.11.2007 US 937908
(43) Date of publication of application: 01.09.2010
(73) Proprietor: McAfee, Inc., Santa Clara, CA 95054 (US)
(72) Inventor: ALPEROVITCH, Dmitri, Atlanta GA 30326 (US); JUDGE, Paul, Alpharetta GA 30022 (US); KRASSER, Sven, Atlanta Georgia 30308 (US); SCHNECK, Phyllis A., Atlanta GA 30329 (US)
(74) Representative: Goddar, Heinz J.
(86) International application number: PCT/US2008/082781
(87) International publication number: WO 2009/062023

(56) References cited:
- EP-A2- 1 672 558
- JP-A- 2006 268 544
- US-A1- 2006 015 942
- US-A1- 2006 168 024
- US-A1- 2006 212 931
- US-A1- 2006 230 134
- US-A1- 2007 124 803
- US-A1- 2007 130 351
- US-A1- 2008 175 226
- US-A1- 2008 177 691

## Description

### TECHNICAL FIELD

This document relates generally to systems and methods for rating the security of networks and more particularly to systems and methods for determining whether to allow a relationship between entities based upon a security rating.

### BACKGROUND

Internet connectivity has become central to many daily activities. For example, millions of people in the worldwide use the internet for various bill pay and banking functionalities. Countless more people use the internet for shopping, entertainment, to obtain news, and for myriad other purposes. Moreover, many businesses rely on the internet for communicating with suppliers and customers, as well as providing a resource library for their employees.

However, it can be a difficult decision to create business relationships and share business information with other entities. For example, in the credit card industry, many of the publicized security breaches have been committed by business partners associated with the credit card company responsible for safeguarding consumer information. Thus, it can be important to gather information prior to making decisions on such relationships. However, it can be even more difficult to identify the level of security associated with an entity entrusted with confidential information.

US 2006/0168024 A1 discloses a method of using and refining a pre-established sender reputation. Said method comprises connecting with a sender, evaluating whether a reputation exists, if a reputation exists, retrieving the sender reputation from the sender reputation data base, evaluating whether the retrieved sender reputation is above a selected threshold, and if yes, generating a block against the sender.

### SUMMARY

The invention is defined by the independent claims. Further embodiments are defined by the dependent claims.

### DESCRIPTION OF DRAWINGS

FIG. 1A is a block diagram depicting an example network architecture including a network rating system.
FIG. 1B is a block diagram depicting another example network architecture including a network rating system.
FIG. 2 is a block diagram depicting an example network rating system.
FIG. 3 is a block diagram depicting a variety of reputations that can be aggregated for network ratings.
FIG. 4 is a block diagram depicting an example network architecture including a network rating system residing on an enterprise network.
FIG. 5 is flowchart illustrating an example method for approving network connections based upon network rating.
FIG. 6 is flowchart illustrating an example method for rating a network entity.
FIG. 7 is flowchart illustrating an example method for arbitrating a new relationship based on network ratings associated with the entities.

### DETAILED DESCRIPTION

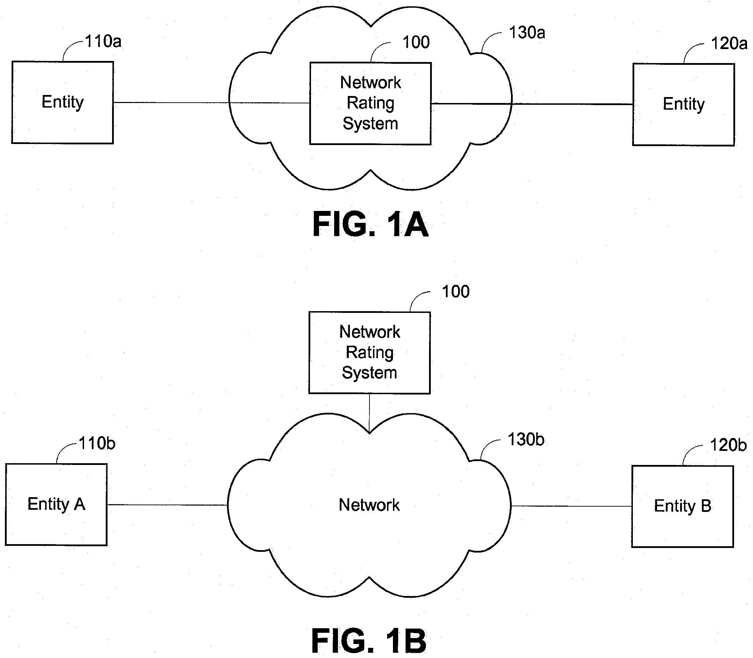

FIG. 1A is a block diagram depicting an example network architecture including a network rating system. The network architecture can include a network rating system 100. The network rating system 100 can be used to provide input to a first entity 110 and a second entity 120 to determine whether a relationship between the entities is formed. In some implementations, a relationship can include a network connection or data sharing between two entities (e.g., via a network 130). For example, if a credit card company (e.g., a first entity 110) is thinking about outsourcing activities that involve the provision of customer information to a vendor (e.g., a second entity 120), the credit card company may want to determine whether the vendor takes appropriate security precautions with its network to protect any data that it might share with the vendor..

In various implementations, the network rating system can use a reputation associated with the first and second entity as a network rating. Reputation of a network entity can be derived based upon the type of traffic (e.g., spam, phishing, malware, zombies, legitimate messages, etc.) as well as traffic patterns (volume, volatility, frequency, etc.), exploitation patterns, volume and duration associated with the entity, and other behavior that can be used to characterize an entity. Reputation systems are described in detail in United States Patent Application Serial No. 11/142,943, entitled "Systems and Methods for Classification of Messaging Entities," filed on June 2, 2005, and United States Patent Application Serial No. 11/626,462, entitled "Correlation and Analysis of Entity Attributes," filed on January 24, 2007. Reputation information can also be retrieved using TrustedSource™, available from Secure Computing Corporation of San Jose, CA.

FIG. 1B is a block diagram depicting another example network architecture including a network rating system 100. In some implementations, a network rating system 100 can be provided by a third party. For example, an entity can query reputation information from TrustedSource.org, available from Secure Computing Corporation of San Jose, CA. In various implementations, the reputation information can be queried by either or both of the first entity and the second entity.

Upon receiving a response to a reputation query, the reputation information can be used to determine whether to form a relationship between a first entity and a second entity. In some implementations, the reputation information can be provided as a raw score. The raw score of a first entity, for example, can be compared to a second entity's raw score to provide a comparison of the security measures taken by the first entity and the second entity. For example, if the raw score were on a scale from 1 to 10 (1 being the worst security and 10 being the highest security), and a first entity rated an 8, while the second entity rated a 2, the first entity might consider this to be an unacceptable level of risk to form a relationship with the second entity. In such an example, the second entity may gain access to sensitive customer data in the course of a relationship, and expose that sensitive data to potential abuse by hackers based on the relatively low level of security the second entity provides to its network.

In another example, using the same scale, a first entity might have a rating of 7, while a second entity might have a rating of 6. In some implementations, the relationship can be denied based upon a slight difference in ratings. In other implementations, the relationship can be permitted based upon the ratings being within a range of each other. For example, in some implementations, the relationship can be permitted based upon the ratings being within 1 or 2 points of each other. In other implementations, the relationship can be permitted based upon the ratings being within a grouping. For example, poor/average security might be rated between 1 and 4, good security might be rated between 5 and 8, and excellent security might be rated between 9 and 10. In such examples, relationships between entities with network ratings falling within the same category can be permitted.

In some implementations, the network rating can provide incentive for a poorly rated entity to increase its level of security in order to form relationships with more highly rated entities. For example, a first entity with a rating of 5 that wants to form a relationship with a second entity with a rating of 8 might use the rating to determine what sorts of security enhancements can be made to raise its rating to an permissible level for creating a relationship between the two entities. In other implementations, an entity can attempt to enhance its network rating to provide leverage for negotiating additional security with entities having an existing relationship with the entity.

In some implementations, each network rating point can be assigned a dollar figure. The dollar figure can represent the additional risk being taken on by the more secure entity in order to enter into a relationship with the less secure entity. Thus, for example, a first entity with a network rating of 9 might require that a second entity with a security rating of 5 provide monetary incentive to the first entity in exchange for taking on the additional risk represented by creating a relationship with the second entity. In other implementations, a difference in security rating between two entities entering into a relationship can be used to provide for damages between the parties in the event that the lower rated entity compromises data provided by a higher rated entity.

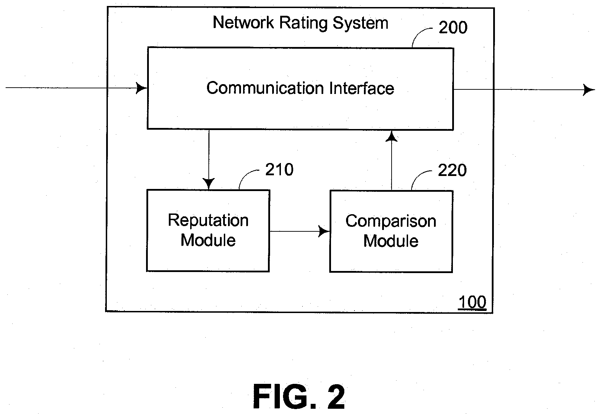

FIG. 2 is a block diagram depicting an example network rating system 100. In various implementations, the network rating system 100 can include a communications interface 200, a reputation module 210 and a comparison module 220. In some implementations, the communications module 210 can receive a reputation request from an entity before or after a relationship is established. In other implementations, the communications module 210 can arbitrate between two entities before a relationship is established.

In various implementations, the communications module can be any of an ethernet card, an 802.11x card, or any other interface operable to facilitate communications between two network entities. For example, in some implementations, the communications interface can include a server operable to receive network rating requests and to provide responses to network rating requests based upon a response received from a comparison module 220 in conjunction with reputation information provided by a reputation module 210.

In some implementations, the reputation module 210 can include a reputation server, such as a TrustedSource™ server, available from Secure Computing Corporation of San Jose, CA. In such implementations, the communication module 200 can send a reputation request to the reputation module. In other implementations, the reputation module 210 can be co-located with the communications interface 200 as shown in FIG. 2. The reputation module 210 can examine communications received from all network entities and identify patterns and other attributes of the communications. In some implementations, such attributes can be used to identify relationships between entities based upon communications between the entities and/or communications originated or destined for the entities. Relationships can be used to assign reputations from previously classified entities to entities which have not yet been classified. For example, if an unknown entity is sending communications that are similar to communications sent by a known entity, and the unknown entity's communication patterns are similar to the communication patterns of the known entity, it is likely that the two entities are related (e.g., part of the same organization, infected with the same malware, etc.). In some implementations, the reputation module 210 can identify reputation information associated with each of the entities potentially implicated by a relationship.

In some implementations, the network rating system 200 can reply to the network rating request with the network ratings themselves, and allow the entities to determine whether to continue in establishing the relationship. In other implementations, the network rating system 200 can compare the reputations of the first and second entities using a comparison module 220. Upon identifying reputation information associated with the entities, a comparison module 220 can compare the reputation information to identify an response to the network rating request. In some implementations, the response can be based upon a policy. For example, in some implementations, the policy can provide a range within which the ratings are of each other to approve establishing the relationship between the entities. In other implementations, the policy can provide that the ratings associated with each of the entities both share a common range. In still further implementations, the policy can prevent relationships between entities having different ratings.

Based upon the results of the comparison module 220, the communication interface 200 can communicate the decision from the comparison module to one or more of the entities affected by the network rating request. In some implementations, the network rating system 100 can prevent the relationship from being established. In other implementations, the network rating system 100 merely provides input to the entities in determining whether to establish a relationship with the other entity.

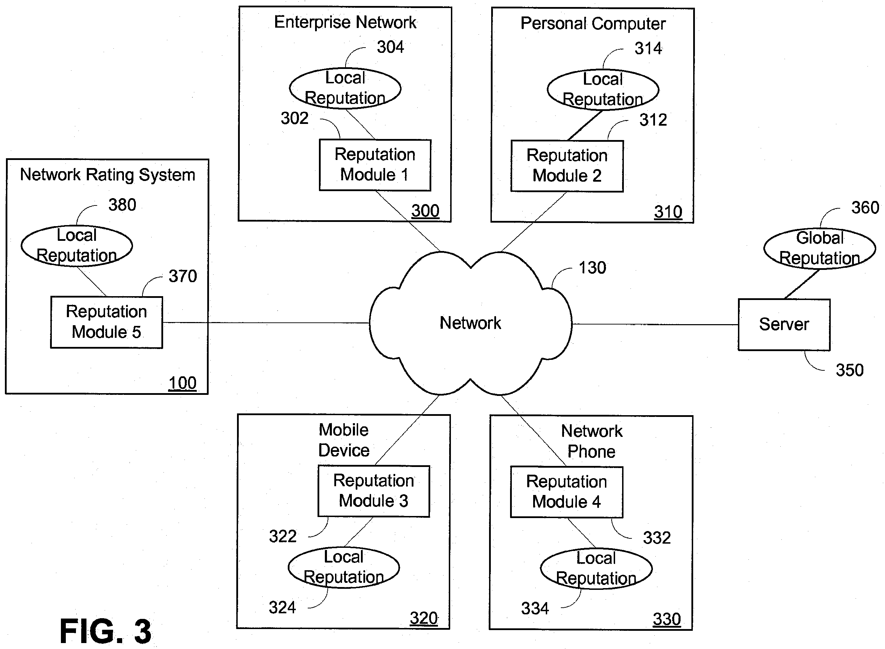

FIG. 3 is a block diagram depicting a variety of reputations that can be aggregated for network ratings. In some implementations, reputations can be aggregated from a number of different reputation systems. For example, an enterprise network 300 (e.g., a company network) can include a first reputation module 302 and a first local reputation 304. The first local reputation 304 can be based upon the traffic that passes through a server associated with the enterprise network. However, a single device might only observes a small portion of the network traffic. To supplement this information traffic can be observed by multiple devices (e.g., a personal computer 310, a mobile device 320, and/or a network phone 330). A personal computer 310 can include a second reputation module 312 and a second local reputation 314. The second local reputation 314 can be based upon the traffic observed by the personal computer 310. Similarly, a mobile phone 320 can include a third reputation module 322 and a third local reputation 324, and a network phone 330 can include a fourth reputation module 332 and a fourth local reputation 334.

In some implementations, an aggregation server 350 can aggregate the local reputations to derive a global reputation 360 based upon the traffic observed at each of multiple devices spread throughout the network. In various implementations, a network rating system 100 can retrieve the global reputation 360 from the aggregation server 350. A reputation module 370 associated with the network ratings system 100 can use the global reputation to supplement the local reputation 380 derived from network traffic identified by the network ratings system 100.

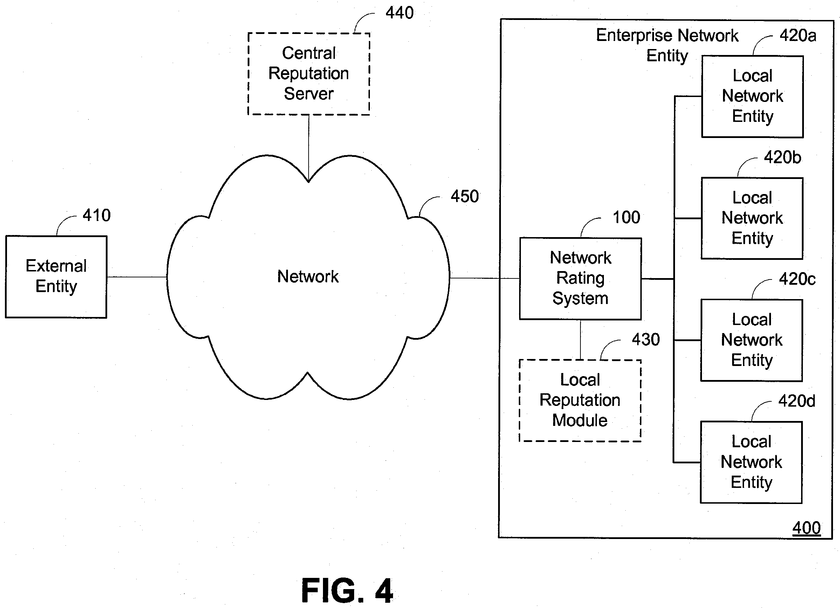

FIG. 4 is a block diagram depicting an example network architecture including a network rating system 100 residing on an enterprise network 400. In some implementations, the network rating system 100 can reside on an enterprise network 400. In such implementations, the network ratings system 100 can operate to determine whether an external entity 410 is permitted to establish a relationship with local network entities 420a-d. The relationship, in various implementations, can include opening a communication path between any of the local network entities 420a-d and the external entity 410. In other implementations, the relationship can include sharing data or creating a client-vendor relationship with the external entity 410, such as by providing bills, account or payment information or authorization to the external entity 410.

In some implementations, the network rating system 100 can retrieve reputation information associated with the external entity from a local reputation module 430. In some implementations, the local reputation module 430 can derive entity reputations based upon traffic observed by the enterprise network entity 400. In other implementations, the local reputation module can periodically retrieve reputation information from a central reputation server 440 and store the reputation information locally.

In other implementations, the network rating system 100 can retrieve reputation information associated with the external entity 410 from a central reputation server 440 through a network 450. In still further implementations, a local reputation module 430 can operate in conjunction with a central reputation server to provide reputation information to the network rating system 100. For example, if a communication is received from an entity unknown to the local reputation module, the reputation of the entity can be retrieved from the central reputation system 440. In other examples, reputation information received from a central reputation server 440 can be biased by the local reputation module 430 based upon local tolerances for various types of traffic. Arbitrating between local and global reputation is described in detail by United States Patent Application Serial No. 11/626,479, entitled "Aggregation of Reputation Data," filed on January 24, 2007.

In some implementations, the network rating system 100 can compare the reputation information associated with the external entity to a connection policy to determine whether to permit the connection. For example, a connection policy might exclude entities rated lower than 5 (e.g., on a scale from 1 to 10, 1 being the poorest reputation, 10 being the best reputation). In this example, the network rating system can permit connections to any networks rated 5 or higher, while denying connections to any networks rated 4 or lower.

In various implementations, some of the local network entities 420a-d might be afforded different privileges with respect to establishing connections with external entities. For example, an information technology (IT) network entity 420a might be allowed greater ability to generate connections to external entities 410, while an administrative network entity 420b might be allowed limited access to generate connections to external entities 410. In various implementations, the privileges can be set by a system administrator by specifying a connection policy.

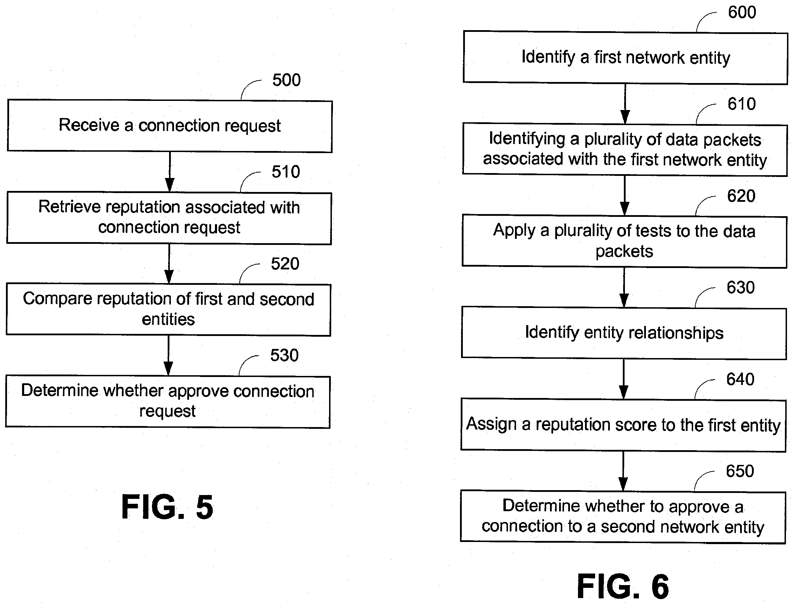

FIG. 5 is flowchart illustrating an example method for approving network connections based upon network rating. At stage 500 a connection request is received. The connection request can be received, for example, by a communications interface (e.g., communications interface 200 of FIG. 2). In various implementations, the connection request can be originated by one or more entities attempting to establish a relationship. The relationship can include, for example, a network connection, data sharing, purchase request, or any other business transaction. In various implementations, the connection request can include a routing request received from an entity (e.g., a client, a router, a server, etc.).

At stage 510 reputation associated with the connection request is retrieved. The reputation can be retrieved, for example, by a reputation module (e.g., reputation module 210 of FIG. 2). In various implementations, the reputation module can be hosted locally or on a remote server (e.g., a third party server). In some implementations, the reputation associated with each of the entities attempting to establish a relationship are retrieved. In those implementations where a network rating system resides locally or merely provides network rating to one or more of the entities, the reputation for a second entity can be retrieved by a first entity or network rating system.

At stage 520, the reputation of first and second entities are compared. The reputations of the first and second entities can be compared, for example, by a comparison module (e.g., comparison module 220 of FIG. 2). In various examples the raw reputation scores of each of the entities requesting the relationship can be used as a network rating for each of the respective network entities. These network ratings can provide a rating of the security of a network, and the diligence with which the entity protects their reputation.

At stage 530 approval of the connection request is determined. The determination can be made, for example by a comparison module (e.g., comparison module 220 of FIG. 2). In various implementations, the comparison module can use a connection policy to determine whether to approve a connection between a first and second entity. For example, the connection policy might approve connections between entities that have network ratings within a predetermined rating of each other. In other implementations, the connection policy might approve connections between entities when both entities fall into a predetermined ratings range. In still further implementations, the connection policy can forbid connections between entities whose network ratings do not match. After approval of a connection request, a first entity and a second entity associated with the connection request can communicate with each other.

FIG. 6 is flowchart illustrating an example method for rating a network entity. At stage 600 a first network entity is identified. The first network entity can be identified, for example, by a central reputation server (e.g., central reputation server 440 of FIG. 4). The network entity can be identified based upon a domain, an address grouping or any other identifying characteristic (e.g., a business network).

At stage 610, data packets associated with the first network entity are identified. The data packets can be identified, for example, by a reputation module (e.g., reputation module 430 or 440 of FIG. 4). The data packets can be identified, for example, by parsing the data stream to identify each of the individual packets.

At stage 620, a plurality of tests can be applied to the data packets. The plurality of texts can be applied, for example, by a reputation module (e.g., reputation module 210 of FIG. 2). In various implementations, the plurality of tests can be designed to identify attributes or characteristics of the data packets, groups of those data packets, or entire streams. In further implementations, the plurality of tests can be designed to identify host or destination information associated with individual data packets, groups of data packets or entire streams of data packets.

At stage 630, entity relationships can be identified. The entity relationships can be identified, for example, by a reputation module (e.g., reputation module 210 of FIG. 2). The relationships, in various implementations, can be identified based upon finding similar attributes in data packets belonging to different data streams. In other implementations, relationships can be identified based upon identification of one or more packets traveling from a known entity to an unknown entity. In some examples, the one or more packets can include one or more characteristics that makes the identified relationship stronger (e.g., repeated patterns, data format, identification of malware transmitted to/from the entity, etc.).

At stage 640, reputation score can be assigned to the first entity. The reputation score can be assigned, for example, by a reputation module (e.g., reputation module 210 of FIG. 2). In some implementations, the identified relationship can enable a reputation module to assign a portion (including all) of the reputation of one entity to another entity. The strength of the relationship can be proportional to the portion of reputation assigned between the entities. In various implementations, both positive and negative reputation information associated with an entity can be imputed to related entities. For example, if a relationship is identified between an entity with a reputation for originating legitimate communications and an entity with a reputation for originating non-legitimate communications, a portion of the reputation of the reputable entity can be attributed to the non-reputable and a portion of the reputation of the non-reputable entity can be attributed to the reputable entity.

At stage 650, a determination whether to approve a connection to a second network entity is made. The determination can be made based upon a comparison module (e.g. a comparator or comparison module 220 of FIG. 2). In various implementations, the comparison module can use a connection policy to determine whether to approve a connection between a first and second entity. For example, the connection policy might approve connections between entities that have network ratings within a predetermined rating of each other. In other implementations, the connection policy might approve connections between entities when both entities fall into a predetermined ratings range. In still further implementations, the connection policy can forbid connections between entities whose network ratings do not match. After approval of a connection request, a first entity and a second entity associated with the connection request can communicate with each other.

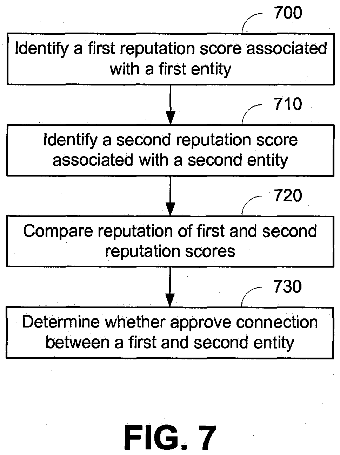

FIG. 7 is flowchart illustrating an example method for arbitrating a new relationship based on network ratings associated with the entities. At stage 700, a first reputation score associated with a first entity is identified. The reputation score can be identified, for example, by a reputation module (e.g., reputation module 210 of FIG. 2). In various implementations, the reputation module can be hosted locally or on a remote server (e.g., a third party server). In some implementations, the reputation associated with each of the entities attempting to establish a relationship are retrieved. In those implementations where a network rating system resides locally or merely provides network rating to one or more of the entities, the reputation for a second entity can be retrieved by a first entity or network rating system.

At stage 710, a second reputation score associated with a second entity is identified. The reputation score can be identified, for example, by a reputation module (e.g., reputation module 210 of FIG. 2). In various implementations, the reputation module can be hosted locally or on a remote server (e.g., a third party server). In some implementations, the reputation associated with each of the entities attempting to establish a relationship are retrieved. In those implementations where a network rating system resides locally or merely provides network rating to one or more of the entities, the reputation for a second entity can be retrieved by a first entity or network rating system.

At stage 720, the first and second reputation scores are compared. The reputations of the first and second entities can be compared, for example, by a comparison module (e.g., comparison module 220 of FIG. 2). In various examples the raw reputation scores of each of the entities requesting the relationship can be used as a network rating for each of the respective network entities. These network ratings can provide a rating of the security of a network, and the diligence with which the entity protects their reputation.

At stage 730, a determination of whether approve connection between a first and second entity is made. The determination can be made based upon a comparison module (e.g. a comparator or comparison module 220 of FIG. 2). In various implementations, the comparison module can use a connection policy to determine whether to approve a connection between a first and second entity. For example, the connection policy might approve connections between entities that have network ratings within a predetermined rating of each other. In other implementations, the connection policy might approve connections between entities when both entities fall into a predetermined ratings range. In still further implementations, the connection policy can forbid connections between entities whose network ratings do not match. After approval of a connection request, a first entity and a second entity associated with the connection request can communicate with each other.

The systems and methods disclosed herein may use data signals conveyed using networks (e.g., local area network, wide area network, internet, etc.), fiber optic medium, carrier waves, wireless networks (e.g., wireless local area networks, wireless metropolitan area networks, cellular networks, etc.), etc. for communication with one or more data processing devices (e.g., mobile devices). The data signals can carry any or all of the data disclosed herein that is provided to or from a device.

The methods and systems described herein may be implemented on many different types of processing devices by program code comprising program instructions that are executable by one or more processors. The software program instructions may include source code, object code, machine code, or any other stored data that is operable to cause a processing system to perform methods described herein.

The systems and methods may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that software instructions or a module can be implemented for example as a subroutine unit of code, or as a software function unit of code, or as an object (as in an object-oriented paradigm), or as an applet, or in a computer script language, or as another type of computer code or firmware. The software components and/or functionality may be located on a single device or distributed across multiple devices depending upon the situation at hand.

This written description sets forth the best mode of the invention and provides examples to describe the invention and to enable a person of ordinary skill in the art to make and use the invention. This written description does not limit the invention to the precise terms set forth. Thus, while the invention has been described in detail with reference to the examples set forth above, those of ordinary skill in the art may effect alterations, modifications and variations to the examples without departing from the scope of the invention.

As used in the description herein and throughout the claims that follow, the meaning of "a," "an," and "the" includes plural reference unless the context clearly dictates otherwise. Also, as used in the description herein and throughout the claims that follow, the meaning of "in" includes "in" and "on" unless the context clearly dictates otherwise. Finally, as used in the description herein and throughout the claims that follow, the meanings of "and" and "or" include both the conjunctive and disjunctive and may be used interchangeably unless the context clearly dictates otherwise.

Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

These and other implementations are within the scope of the following claims.

## Claims

1. A computer implemented method, comprising:
receiving (500) a connection request for a connection between a first network entity and a second network entity;
retrieving (510) a reputation of the second network entity from a reputation server, the reputation server being operable to derive a reputation of the second network entity based upon data associated with the second network entity;
comparing (520) a reputation of the second network entity to a reputation of the first network entity; and
determining (530) whether to approve a connection between the first network entity and the second network entity based upon the comparison.

2. The method of claim 1, wherein the reputation of the first network entity and the reputation of the second network entity comprise changes in reputations respectively associated with the first and second network entities over a period of time.

3. The method of claim 1, wherein the reputation of the first network entity and the reputation of the second network entity comprise reputation for being infected with malware.

4. The method of claim 1, wherein the reputation of the first network entity and the reputation of the second network entity comprise reputation for communication patterns associated with the first network entity and the second network entity, respectively.

5. The method of claim 4, wherein the communication patterns comprise traffic volume, traffic content, traffic correlation, traffic classification and categorization, and malware traffic.

6. The method of claim 1, wherein the reputations of the first network entity and the second network entity are based upon a plurality of reputations of other network entities associated with the first or second network entities.

7. The method of claim 1, wherein the reputations of the first network entity and the second network entity comprise a first and second reputation score, respectively, wherein the connection is approved based upon the second reputation score being higher than the first reputation score.

8. A connection control system comprising:
a communication interface (200) operable to receive connection requests for a connection between a first entity and a second entity;
a reputation module (210) operable to provide a reputation associated with the first entity and the second entity based upon communications associated with each of the entities;
a comparison module (220) operable to compare the reputation of the first entity with the reputation of the second entity;
wherein the communication interface (200) is operable to communicate a response to the connection request based upon the comparison between the reputation of the first entity and the reputation of the second entity.

9. The system of claim 8, wherein the reputation of the first entity and the reputation of the second entity comprise changes in reputations respectively associated with the first and second entities over a period of time.

10. The system of claim 9, wherein the reputations of the first entity and the second entity comprise a first and second reputation score, respectively.

11. The system of claim 10, wherein the comparison module (220) is operable to approve a connection based upon the second reputation score being higher than the first reputation score.

12. The system of claim 10, wherein the comparison module (220) is operable to approve a connection based upon the first reputation score and the second reputation score being within a threshold range of one another.

## Patentansprüche

1. Computerimplementiertes Verfahren, umfassend:
Empfangen (500) einer Verbindungsanforderung für eine Verbindung zwischen einer ersten Netzwerkeinheit und einer zweiten Netzwerkeinheit;
Abrufen (510) einer Reputation der zweiten Netzwerkeinheit von einem Reputationsserver, wobei der Reputationsserver betreibbar ist, um eine Reputation der zweiten Netzwerkeinheit basierend auf der zweiten Netzwerkeinheit zugeordneten Daten abzuleiten;
Vergleichen (520) einer Reputation der zweiten Netzwerkeinheit mit einer Reputation der ersten Netzwerkeinheit; und
Bestimmen (530), ob eine Verbindung zwischen der ersten Netzwerkeinheit und der zweiten Netzwerkeinheit basierend auf dem Vergleich genehmigt wird.

2. Verfahren nach Anspruch 1, wobei die Reputation der ersten Netzwerkeinheit und die Reputation der zweiten Netzwerkeinheit Änderungen in den Reputationen umfassen, die jeweils über einen Zeitraum der ersten und der zweiten Netzwerkeinheit zugeordnet sind.

3. Verfahren nach Anspruch 1, wobei die Reputation der ersten Netzwerkeinheit und die Reputation der zweiten Netzwerkeinheit eine Reputation umfassen, mit Malware infiziert zu sein.

4. Verfahren nach Anspruch 1, wobei die Reputation der ersten Netzwerkeinheit und die Reputation der zweiten Netzwerkeinheit eine Reputation für Kommunikationsmuster umfassen, die jeweils der ersten Netzwerkeinheit und der zweiten Netzwerkeinheit zugeordnet sind.

5. Verfahren nach Anspruch 4, wobei die Kommunikationsmuster Verkehrsmenge, Verkehrsinhalt, Korrelation des Verkehrs, Verkehrsklassifizierung und -einstufung und Malware-Verkehr umfassen.

6. Verfahren nach Anspruch 1, wobei die Reputationen der ersten Netzwerkeinheit und der zweiten Netzwerkeinheit auf einer Vielzahl von Reputationen anderer Netzwerkeinheiten basieren, die der ersten oder zweiten Netzwerkeinheit zugeordnet sind.

7. Verfahren nach Anspruch 1, wobei die Reputationen der ersten Netzwerkeinheit und der zweiten Netzwerkeinheit eine erste bzw. eine zweite Reputationswertung umfassen, wobei die Verbindung darauf basierend genehmigt wird, dass die zweite Reputationswertung höher ist als die erste Reputationswertung.

8. Verbindungssteuerungssystem, umfassend:
eine Kommunikationsschnittstelle (200), die betreibbar ist, um Verbindungsanforderungen für eine Verbindung zwischen einer ersten Einheit und einer zweiten Einheit zu empfangen;
ein Reputationsmodul (210), das betreibbar ist, um eine Reputation bereitzustellen, die der ersten Einheit und der zweiten Einheit basierend auf jeder der Einheiten zugeordneten Kommunikationen zugeordnet ist;
ein Vergleichsmodul (220), das betreibbar ist, um die Reputation der ersten Einheit mit der Reputation der zweiten Einheit zu vergleichen;
wobei die Kommunikationsschnittstelle (200) betreibbar ist, um eine Antwort auf die Verbindungsanforderung basierend auf dem Vergleich zwischen der Reputation der ersten Einheit und der Reputation der zweiten Einheit zu kommunizieren.

9. System nach Anspruch 8, wobei die Reputation der ersten Einheit und die Reputation der zweiten Einheit Änderungen in den Reputationen umfassen, die jeweils über einen Zeitraum der ersten und der zweiten Einheit zugeordnet sind.

10. System nach Anspruch 9, wobei die Reputationen der ersten Einheit und der zweiten Einheit jeweils eine erste und eine zweite Reputationswertung umfassen.

11. System nach Anspruch 10, wobei das Vergleichsmodul (220) betreibbar ist, um eine Verbindung darauf basierend zu genehmigen, dass die zweite Reputationswertung höher ist als die erste Reputationswertung.

12. System nach Anspruch 10, wobei das Vergleichsmodul (220) betreibbar ist, um eine Verbindung darauf basierend zu genehmigen, dass die erste Reputationswertung und die zweite Reputationswertung in einem Schwellenwertbereich zueinander liegen.

## Revendications

1. Procédé implémenté par ordinateur, consistant à :
recevoir (500) une demande de connexion pour une connexion entre une première entité de réseau et une seconde entité de réseau ;
récupérer (510) une réputation de la seconde entité de réseau depuis un serveur de réputation, le serveur de réputation étant destiné à trouver une réputation de la seconde entité de réseau en se basant sur des données associées à la seconde unité de réseau ;
comparer (520) une réputation de la seconde entité de réseau à une réputation de la première entité de réseau ; et
déterminer (530) s'il faut approuver une connexion entre la première entité de réseau et la seconde entité de réseau en se basant sur la comparaison.

2. Procédé selon la revendication 1, dans lequel la réputation de la première entité de réseau et la réputation de la seconde entité de réseau comprennent des changements dans les réputations associées respectivement aux première et seconde entités de réseau pendant une période de temps.

3. Procédé selon la revendication 1, dans lequel la réputation de la première entité de réseau et la réputation de la seconde entité de réseau comprennent une réputation qui est infectée avec un programme malveillant.

4. Procédé selon la revendication 1, dans lequel la réputation de la première entité de réseau et la réputation de la seconde entité de réseau comprennent une réputation pour des motifs de communication associés à la première entité de réseau et à la seconde entité de réseau, respectivement.

5. Procédé selon la revendication 4, dans lequel les motifs de communication comprennent un volume de trafic, un contenu de trafic, une corrélation de trafic, une classification et une catégorisation du trafic ainsi qu'un trafic de programme malveillant.

6. Procédé selon la revendication 1, dans lequel les réputations de la première entité de réseau et de la seconde entité de réseau sont basées sur une pluralité de réputations d'autres entités de réseau associées aux première et seconde entités de réseau.

7. Procédé selon la revendication 1, dans lequel les réputations de la première entité de réseau et de la seconde entité de réseau comprennent une première et une seconde note de réputation, respectivement, dans lequel la connexion est approuvée en se basant sur la seconde note de réputation qui est plus élevée que la première note de réputation.

8. Système de commande de connexion comprenant :
une interface de communication (200) destinée à recevoir des demandes de connexion pour une connexion entre une première entité et une seconde entité ;
un module de réputation (210) destiné à fournir une réputation associée à la première entité et à la seconde entité en se basant sur des communications associées à chacune des entités ;
un module de comparaison (220) destiné à comparer la réputation de la première entité avec la réputation de la seconde entité ;
dans lequel l'interface de communication (200) est destinée à communiquer une réponse à la demande de connexion en se basant sur la comparaison entre la réputation de la première entité et la réputation de la seconde entité.

9. Système selon la revendication 8, dans lequel la réputation de la première entité et la réputation de la seconde entité comprennent des changements dans les réputations associées respectivement aux première et seconde entités pendant une période de temps.

10. Système selon la revendication 9, dans lequel les réputations de la première entité et de la seconde entité comprennent une première et une seconde note de réputation, respectivement.

11. Système selon la revendication 10, dans lequel le module de comparaison (220) est destiné à approuver une connexion basée sur la seconde note de réputation qui est plus élevée que la première note de réputation.

12. Système selon la revendication 10, dans lequel le module de comparaison (220) est destiné à approuver une connexion basée sur la première note de réputation et la seconde note de réputation qui se situent dans une plage de seuils de l'une de l'autre.
